# EUROPÄISCHE PATENTSCHRIFT

(11) **EP 3 048 079 B1**
(45) Veröffentlichungstag und Bekanntmachung des Hinweises auf die Patenterteilung: **17.05.2017**
(21) Anmeldenummer: 16150189.5
(22) Anmeldetag: 05.01.2016
(51) Int. Cl.: B66F 9/075, B66F 9/14

(54) **FLURFÖRDERZEUG**
INDUSTRIAL TRUCK
CHARIOT DE MANUTENTION

(30) Priorität: 22.01.2015 DE 102015201098; 18.06.2015 DE 202015004375 U
(43) Veröffentlichungstag der Anmeldung: 27.07.2016
(73) Patentinhaber: Jungheinrich Aktiengesellschaft, 22047 Hamburg (DE)
(72) Erfinder: Schmalzl, Jürgen, 85778 Haimhausen (DE); Schöttke, Carsten, 85368 Moosburg (DE)
(74) Vertreter: Tiesmeyer, Johannes

(56) Entgegenhaltungen:
- EP-A1- 0 881 191
- EP-B1- 2 368 832

## Beschreibung

Die Erfindung betrifft ein Flurförderzeug, umfassend
- ein Hubgerüst,
- einen an dem Hubgerüst auf- und abwärts bewegbaren Fahrerplatz,
- einen an dem Fahrerplatz vorzugsweise in dessen Front angeordneten Seitenschubrahmen, der zusammen mit dem Fahrerplatz an dem Hubgerüst auf- und abwärts bewegbar ist und eine seitlich quer zur Geradeausfahrtrichtung des Flurförderzeugs hin- und herbewegbare Lastaufnahmevorrichtung trägt, und
- eine mit dem Fahrerplatz an dem Hubgerüst auf- und abwärts bewegbare Schwingungsdämpfungseinrichtung zur Dämpfung von Schwingungen.

Derartige Flurförderzeuge werden auch als Kommissionierstapler - und in einer häufigen Bauart als Kommissionier-Dreiseitenstapler bezeichnet. Sie werden oft als Hochregalstapler eingesetzt. Mit ihnen lässt sich das Ein- und Ausstapeln ganzer Paletten und das Kommissionieren einzelner Artikel aus dem Hochregal mühelos verbinden. Da der üblicherweise als Kabine oder Fahrerstand ausgebildete Fahrerplatz mit einer sich dort befindenden Bedienungsperson zusammen mit der Lastaufnahmevorrichtung vertikal am Hubgerüst verfahrbar ist, bezeichnet man derartige Flurförderzeuge auch als man-up-Fahrzeuge oder man-up-Flurförderzeuge. Bei verschiedenen Bautypen von man-up-Flurförderzeugen ist das Hubgerüst teleskopisch ausfahrbar und einziehbar, wobei der Fahrerplatz an der am höchsten ausfahrbaren Teleskopstufe des Hubgerüstes höhenverstellbar befestigt ist.

Die an dem Seitenschubrahmen bewegbar geführte Lastaufnahmevorrichtung kann ein Zusatzhubgerüst mit daran relativ zum Fahrerstand auf- und abwärts bewegbaren Lastaufnahmemitteln umfassen, bei denen es sich üblicherweise um eine Lasttraggabel handelt. Das Zusatzhubgerüst ist an einem Schwenkschubgerät angeordnet und daran um eine üblicherweise vertikale Achse um z.B. ca. 180° schwenkbar, so dass die an dem Zusatzhubgerüst höhenverstellbar befestigte Lasttraggabel aus einer Stellung mit Ausrichtung seitlich quer zur Geradeausfahrtrichtung des Flurförderzeugs in eine Stellung mit entgegengesetzter seitlicher Ausrichtung verschwenkt werden kann. Das Schwenkschubgerät ist an dem Seitenschubrahmen üblicherweise linear geführt.

Eine typische Aufgabe für das Flurförderzeug besteht zum Beispiel darin, eine Palette mit darauf befindlicher Last in ein Regal einzulagern, wobei sich das Flurförderzeug in einem Schmalgang zwischen Regalen eines Hochregallagers befindet und die Palette auf der Lasttraggabel aufgenommen ist. Das Einschieben der Palette in das Regal erfolgt seitlich quer zur Geradeausfahrtrichtung des Flurförderzeugs, wobei vorausgesetzt sei, dass die Lasttraggabel bereits seitlich zu dem Regal hin korrekt auf den gewünschten Lagerplatz ausgerichtet ist und sich das Schwenkschubgerät mit dem daran vorgesehenen Zusatzhubgerüst in einer seitlichen Endstellung an dem vom betreffenden Regal entfernten Ende des Seitenschubrahmens befindet. Durch lineares seitliches Verschieben des Schwenkschubgerätes entlang des Seitenschubrahmens kann dann die beladene Palette in das Regal eingeführt werden. Bei bisher bekannten Dreiseitenstaplern der hier betrachteten Art ist die Einstapeltiefe, d.h. das Maß der seitlichen Verlagerung der Lasttraggabel relativ zum Hubgerüst oder zum Fahrerstand, durch den Verschiebeweg des Schwenkschubgerätes an dem Seitenschubrahmen und somit durch die Breitendimension des Seitenschubrahmens begrenzt. Die Breitendimension des Seitenschubrahmens ist ihrerseits durch die maximal zulässige Breite des Flurförderzeugs begrenzt. Bei Schmalgangstablern ist die maximal zulässige Breite des Flurförderzeugs vergleichsweise gering.

Die Anmelderin verfolgt ein neues Konzept der Vergrößerung des Maßes der maximalen seitlichen Verlagerung der Lasttraggabel relativ zum Hubgerüst, das sogenannte Überschub-Konzept. Gemäß diesem Konzept ist eine Überschubvorrichtung zur seitlichen Bewegung des Seitenschubrahmens relativ zu dem Fahrerplatz vorgesehen, wobei die Überschubvorrichtung eine den Seitenschubrahmen seitlich quer zur Geradeausfahrtrichtung des Flurförderzeugs bewegbar an dem Fahrerplatz haltende Seitenschubrahmenführung und eine steuerbare Stelleinrichtung aufweist, die dazu eingerichtet ist, den Seitenschubrahmen längs der Seitenschubrahmenführung relativ zu dem Fahrerplatz zu bewegen, um den seitlichen Bewegungsbereich der Lastaufnahmevorrichtung relativ zu dem Fahrerplatz zu vergrößern. Die Überschubvorrichtung ermöglicht somit die seitlich horizontale Verschiebung des Seitenschubrahmens relativ zum Fahrerstand, wobei die Lastaufnahmevorrichtung zusätzlich relativ zu dem Seitenschubrahmen an diesem seitlich bewegbar ist. Die Lastaufnahmevorrichtung kann somit eine seitliche Teleskopierbewegung ausführen, um eine größere Einstapeltiefe zu erzielen, als dies bisher bei Flurförderzeugen der hier betrachteten Art möglich war.

Zum Antreiben der verschiedenen bewegbaren Komponenten an dem Hubgerüst sind verschiedene steuerbare Antriebsmittel vorgesehen. Sie dienen je nach Ausstattung des Flurförderzeugs zum Bewegen der Lastaufnahmemittel am Zusatzhubgerüst, zum Schwenken des Zusatzhubgerüstes um eine Hochachse, zum Bewegen der Lastaufnahmevorrichtung bzw. des Schwenkschubgerätes an dem Seitenschubrahmen, zum Bewegen des Fahrerstandes am Hubgerüst und ggf. zum teleskopischen Ausfahren und Einziehen des Hubgerüstes sowie zum Bewegen des Seitenschubrahmens relativ zum Fahrerstand. Vorzugsweise handelt es sich dabei um hydraulische Antriebsmittel.

Es ist ein bekanntes Problem, dass bei Flurförderzeugen der hier betrachteten Art Schwingungen am Hubgerüst, insbesondere Schwingungen mit seitlichen, d.h. quer zur Geradeausfahrtrichtung des Flurförderzeugs gerichteten Schwingungskomponenten auftreten, insbesondere bei Fahrt auf unebenem Fahruntergrund. Solche Schwingungen sind oft umso heftiger, je höher der Fahrerstand und seine Vorbaugeräte am Hubgerüst angehoben sind und je größer die mittels der Lastaufnahmevorrichtung gegebenenfalls aufgenommene und angehobene Last ist. Solche Schwingungsbewegungen können für eine im Fahrerstand befindliche Bedienungsperson unangenehm sein und machen das Einlagern und Auslagern von Paletten in bzw. aus Regalen schwierig oder gar zeitweise unmöglich, so dass die Bedienungsperson einen Einlagerungs- oder Auslagerungsvorgang erst dann sicher einleiten kann, wenn die Schwingungen bei stehendem Flurförderzeug abgeklungen sind. Alternativ könnte die Bedienungsperson das Flurförderzeugs bei Fahrt auf unebenem Boden grundsätzlich mit reduzierter Geschwindigkeit fahren, um Schwingungsanregungen zu vermeiden. Beides würde jedoch die Produktivität des Flurförderzeugs senken.

Aus der EP 2 368 832 B1 ist ein als man-up-Fahrzeug ausgebildetes Flurförderzeug der eingangs genannten Art bekannt, bei dem bereits Maßnahmen zur Schwingungsreduzierung getroffen wurden. Diese Maßnahmen bestehen darin, dass eine als Lastaufnahmeabschnitt bezeichnete, am Hubgerüst auf- und ab bewegbare, den Fahrerplatz und die damit verbundene Lastaufnahmevorrichtung zusammenhängend umfassende Baugruppe so an dem Hubgerüst angebracht ist, dass sie insgesamt quer zur Geradeausfahrtrichtung (Hauptfahrtrichtung) des Flurförderzeugs Bewegungen mit einer seitlichen, d.h. normalerweise horizontalen Bewegungskomponente relativ zu dem Hubgerüst ausführen kann, wobei hierzu ein gesonderter, nicht für den planmäßigen Betrieb des Flurförderzeugs vorgesehener Bewegungsfreiheitsgrad für die Baugruppe eingerichtet ist. Das bekannte Flurförderzeug weist Mittel zum Dämpfen oder Vermeiden von Schwingungen in der relativen Lage zwischen dem Lastaufnahmeabschnitt und dem Hubgerüst, d.h. zwischen dem Fahrerstand (Fahrerplatz) und dem Hubgerüst, auf. Dabei kann es sich um aktive, semi-aktive und/oder passive Schwingungsdämpfungsmittel handeln, die geeignet sind, eine Kraft oder einen Moment zwischen dem Hubgerüst und dem Lastaufnahmeabschnitt zu erzeugen, die bzw. das eine Komponente entlang des gesonderten, nicht für den planmäßigen Betrieb des Flurförderzeugs vorgesehenen Bewegungsfreiheitsgrades hat. In der EP 2 368 832 B1 sind zur Schwingungsreduzierung u.a. Dämpfungselemente und Federn vorgeschlagen, die einer Auslenkung des Hubgerüstes und der als Lastaufnahmeabschnitt bezeichneten Baugruppe entlang des gesonderten, Bewegungsfreiheitsgrades entgegenwirken. Nachteilig an dieser bekannten Lösung ist ein relativ großer Montageaufwand, um die komplette Baugruppe aus Fahrerstand und allen gemeinsam damit am Hubgerüst vertikal verfahrbaren Lastaufnahmekomponenten unter Einrichtung des gesonderten, nicht für den planmäßigen Betrieb des Flurförderzeugs vorgesehenen Bewegungsfreiheitsgrades an dem Hubgerüst anzubringen. Auch das Nachrüsten eines betreffenden Flurförderzeugs mit diesen bekannten schwingungsreduzierenden Maßnahmen würde sich kompliziert und aufwendig gestalten.

Der Erfindung liegt die Aufgabe zu Grunde, ein Flurförderzeug der eingangs genannten Art bereitzustellen, welches mit montagetechnisch relativ einfach zu realisierenden schwingungsreduzierenden Maßnahmen ausgestattet ist, die einen effizient schwingungsreduzierenden Betrieb bei weitgehend geringer Beeinflussung des Aufenthaltskomforts für eine Bedienungsperson auf dem Fahrerplatz ermöglicht.

Unter einem weiteren Aspekt liegt der Erfindung die Aufgabe zu Grunde, ein Flurförderzeug der eingangs genannten Art mit erweiterten Betriebsfunktionen auszustatten und im Zusammenhang mit den erweiterten Betriebsfunktionen Maßnahmen zur Schwingungsdämpfung zu treffen.

Erfindungsgemäß wird ein Flurförderzeug mit den Merkmalen des Patentanspruchs 1 vorgeschlagen, nämlich ein Flurförderzeug der eingangs genannten Art, welches dadurch gekennzeichnet ist, dass die Schwingungsdämpfungseinrichtung wirkungsmäßig zwischen dem Fahrerplatz und der Lastaufnahmevorrichtung angeordnet- und dazu eingerichtet ist, Schwingungsausgleichsbewegungen der Lastaufnahmevorrichtung relativ zum Fahrerplatz zu ermöglichen, um Schwingungen zu dämpfen oder zu unterdrücken.

Versuche haben ergeben, dass die spezielle erfindungsgemäße Wahl des Wirkungsortes der Schwingungsdämpfungseinrichtung zwischen dem Fahrerplatz und der Lastaufnahmevorrichtung mehrere Vorteile mit sich bringt. Im Unterschied zu dem bekannten Flurförderzeug aus der EP 2 368 832 B1, bei dem die Schwingungsdämpfungseinrichtung wirkungsmäßig zwischen dem Hubgerüst und dem Fahrerplatz angeordnet ist und somit auch der Fahrerplatz unmittelbar an den Schwingungsausgleichsbewegungen teilnimmt, ist der Fahrerplatz gemäß der vorliegenden Erfindung in Bezug auf seitliche Bewegungen starrer mit dem Hubgerüst gekoppelt, wobei jedoch die Lastaufnahmevorrichtung Schwingungsausgleichsbewegungen relativ zu dem Fahrerplatz und dem Hubgerüst ausführen kann. Eine sich auf dem Fahrerplatz befindende Bedienungsperson nimmt somit im Gegensatz zu der Situation nach dem Stand der Technik an den betreffenden Schwingungsausgleichsbewegungen der Lastaufnahmevorrichtung nicht unmittelbar teil, was einen größeren Aufenthaltskomfort für die Bedienungsperson am Fahrerplatz bedeutet. Die Bedienungsperson erfährt bei einer Schwingungsanregung des Flurförderzeugs im Wesentlichen nur die (mittels der Schwingungsdämpfungseinrichtung gedämpften) Schwingungsbewegungen des Hubgerüstes und kann daher aus seiner Position vom Fahrerplatz aus den Schwingungszustand des Gesamtsystems Flurförderzeug besser abschätzen, um schneller feststellen zu können, ob Schwingungen hinreichend abgeklungen sind und ein. Einstapelvorgang oder Ausstapelvorgang eingeleitet oder ggf. fortgesetzt werden kann.

Weiterhin haben Versuche ergeben, dass das Schwingungsabklingverhalten eines erfindungsgemäß ausgestatteten Flurförderzeugs über einen großen Bereich unterschiedliche Hubhöhen und unterschiedlich schwerer Lasten der Lastaufnahmevorrichtung sehr günstig ist, so dass eine rasche Schwingungsdämpfung erfolgen kann.

Die Schwingungsdämpfungseinrichtung ist vorzugsweise an einem an dem Hubgerüst vertikal bewegbaren Träger bzw. Tragrahmen des Fahrerplatzes in dessen Front angebracht.

Gemäß einer besonders bevorzugten Ausführungsform der Erfindung ist die Schwingungsdämpfungseinrichtung zwischen dem Fahrerplatz und dem Seitenschubrahmen angeordnet und dazu eingerichtet, gemeinsame Schwingungsausgleichsbewegungen der Lastaufnahmevorrichtung und des Seitenschubrahmens relativ zum Fahrerplatz zu ermöglichen, um Schwingungen zu dämpfen oder zu unterdrücken.

Gemäß einer Ausführungsvariante der Erfindung ist hierzu an dem Fahrerplatz bzw. an einem Träger oder Tragrahmen des Fahrerplatzes eine Seitenschubrahmenführung vorgesehen, an der der Seitenschubrahmen zur Ausführung von Schwingungsausgleichsbewegungen mit einer Bewegungskomponente seitlich quer zur Geradeausfahrtrichtung des Flurförderzeugs und relativ zum Fahrerplatz bewegbar geführt ist.

Gemäß einer weiteren Ausführungsform der Erfindung weist die Schwingungsdämpfungseinrichtung wenigstens ein federelastisches Rückstellelement in einer Verbindung zwischen der Lastaufnahmevorrichtung und dem Fahrerplatz, vorzugsweise zwischen dem Seitenschubrahmen und dem Fahrerplatz, auf, das derart angeordnet ist, dass es Schwingungsauslenkungen der Lastaufnahmevorrichtung oder/und des Seitenschubrahmens relativ zum Fahrerplatz entgegenwirken kann.

Zweckmäßigerweise sollte die Schwingungsdämpfungseinrichtung auch wenigstens ein z.B. hydraulisches, pneumatisches, hydropneumatisches oder elektromagnetisches Stoßdämpferelement in einer Verbindung zwischen der Lastaufnahmevorrichtung und dem Fahrerplatz, vorzugsweise zwischen dem Seitenschubrahmen und dem Fahrerplatz, aufweisen. Gemäß einer bevorzugten Ausführungsform der Erfindung ist das Stoßdämpferelement in Form eines Zylinders, z.B. Gleichlaufzylinder, ausgebildet, der in einem Zylindergehäuse zwei durch einen darin bewegbaren Kolben separierte Zylinderkammern aufweist, die ein Fluid enthalten und über eine Drosselstelle miteinander verbunden sind.

Eine Ausführungsform der Erfindung ist dadurch gekennzeichnet, dass die Schwingungsdämpfungseinrichtung wenigstens ein mittels einer Steuereinrichtung steuerbares aktives hydraulisches, pneumatisches, hydropneumatisches oder elektromotorisches Schwingungsdämpfungsglied aufweist, wobei die Steuerung des aktiven Schwingungsdämpfungsgliedes vorzugsweise abhängig von Signalen von Schwingungssensoren erfolgt, die an verschiedenen Stellen des Flurförderzeugs, insbesondere am Hubgerüst, vorgesehen sein können.

Gemäß eines besonders hervorzuhebenden Aspektes der Erfindung weist das Flurförderzeug gegenüber dem Stand der Technik erweiterte Betriebsfunktionen auf, wobei dazu vorgesehene Mittel auch als Komponenten der Schwingungsdämpfungseinrichtung dienen. Diese erweiterten Betriebsfunktionen betreffen eine Vergrößerung des seitlichen Bewegungsbereichs der Lastaufnahmevorrichtung relativ zu dem Fahrerplatz. Das Flurförderzeug nach der Erfindung weist hierzu in einer besonders bevorzugten Ausführungsform eine Überschubvorrichtung zur gesteuerten seitlichen Positionierung des Seitenschubrahmens quer zur Geradeausfahrtrichtung des Flurförderzeugs und relativ zu dem Fahrerplatz auf. Die Überschubvorrichtung umfasst die Seitenschubrahmenführung und eine steuerbare Stelleinrichtung zur Bewegung des Seitenschubrahmens längs der Seitenschubrahmenführung, wobei die Schwingungsdämpfungseinrichtung in die Überschubvorrichtung integriert ist.

Die Überschubvorrichtung umfasst somit die den Seitenschubrahmen seitlich quer zur Geradeausfahrtrichtung des Flurförderzeugs, d.h. normalerweise horizontal bewegbar an dem Fahrerplatz haltende Seitenschubrahmenführung und die steuerbare Stelleinrichtung, die dazu eingerichtet ist, den Seitenschubrahmen längs der Seitenschubrahmenführung relativ zu dem Fahrerplatz zu bewegen, um den seitlichen Bewegungsbereich der Lastaufnahmevorrichtung relativ zu dem Fahrerplatz zu vergrößern. Sowohl die Seitenschubrahmenführung als auch die steuerbare Stelleinrichtung können gemäß spezieller Varianten der Erfindung als Komponenten der Schwingungsdämpfungseinrichtung genutzt werden. In einem Schwingungsdämpfungsmodus ermöglicht die Schwingungsdämpfungseinrichtung Schwingungsausgleichsbewegungen des Seitenschubrahmens längs der Seitenschubrahmenführung relativ zum Fahrerplatz, um Schwingungen zu dämpfen oder zu unterdrücken.

Beim Probebetrieb eines so ausgestatteten erfindungsgemäßen Flurförderzeugs hat es sich herausgestellt, dass die schwingungsdämpfende Wirkung der vorgeschlagenen Maßnahmen sehr gut ist. Im Gegensatz zu dem aus der EP 2 368 832 B1 bekannten man-up-Flurförderzeug ist bei dem erfindungsgemäßen Flurförderzeug nicht der komplette Fahrerstand seitlich quer zur Geradeausfahrtrichtung bewegbar am Hubgerüst angebracht, sondern es ist lediglich der Seitenschubrahmen seitlich quer zur Geradeausfahrtrichtung des Flurförderzeugs bewegbar an dem Fahrerplatz angebracht, um Schwingungen entgegenwirken zu können, wobei der üblicherweise als Kabine oder Fahrerstand ausgebildete Fahrerplatz in herkömmlicher Weise auf- und ab bewegbar an dem Hubgerüst montiert ist. Hervorzuheben ist, dass für die Schwingungsausgleichsbewegungen des Seitenschubrahmens und der damit verbundenen Komponenten der Lastaufnahmevorrichtung kein gesonderter Bewegungsfreiheitsgrad vorzusehen ist, denn es wird der planmäßige Bewegungsfreiheitsgrad des seitlichen Überschubs der Überschubvorrichtung für die Schwingungsausgleichsbewegungen mitgenutzt.

Die Stelleinrichtung der Überschubvorrichtung weist gemäß einer bevorzugten Ausführungsform der Erfindung ein mittels einer Steuereinrichtung des Flurförderzeugs steuerbares Stellglied, nämlich ein hydraulisches Stellglied oder/und ein elektromotorisches Stellglied oder/und ein hydropneumatisches oder/und pneumatisches Stellglied als Antriebsmittel zur Bewegung des Seitenschubrahmens relativ zur Seitenschubrahmenführung auf. Bevorzugt kommt ein hydraulisches Stellglied zum Einsatz, da eine on-board-Hydraulikanlage in den meisten Fällen ohnehin vorhanden ist, um Hubfunktionen des Hubgerüstes und ggf. des Zusatzhubgerüstes sowie Schubbewegungen und Schwenkbewegungen der Lastaufnahmevorrichtung mittels betreffender hydraulischer Antriebe ausführen zu können.

Gemäß einer besonders bevorzugten Ausführungsform der Erfindung weist die Stelleinrichtung einen doppelt wirkenden hydraulischen Gleichlaufzylinder als steuerbares Stellglied zwischen dem Fahrerplatz und dem Seitenschubrahmen auf, wobei der Gleichlaufzylinder in einem Zylindergehäuse zwei durch einen darin bewegbaren Kolben separierte Zylinderkammern mit wenigstens einem jeweiligen Hydraulikanschluss für die Zuleitung und Ableitung von Hydraulikfluid umfasst. Das Zylindergehäuse ist zweckmäßigerweise vorne an dem Fahrerplatz bzw. an einem an dem Hubgerüst höhenverstellbar angeordneten Fahrerplatzträger befestigt, wohingegen zwei von den entgegengesetzten Seiten des Kolbens abstehende Kolbenstangen an ihren außen liegenden Kolbenstangenenden mit dem Seitenschubrahmen verbunden sind. Auch die Umkehrung mit Befestigung der Kolbenstangen an dem Fahrerstand und Fixierung des Zylindergehäuses am Seitenschubrahmen wäre denkbar. Der doppelt wirkende Gleichlaufzylinder kann als passives Dämpfungselement genutzt werden, wenn seine Zylinderkammern über wenigstens eine hydraulische Drosselstelle miteinander verbunden werden und er im Übrigen von Hydraulikquellen und Hydrauliksenken vorzugsweise isoliert wird. Aufgrund der gleich großen Kolbenflächen auf beiden Kolbenseiten verhält sich der Gleichlaufzylinder in einem solchen hydraulischen Kurzschluss- oder Nebenschlussfall symmetrisch in Bezug auf die Kraft-Druckumsetzung und somit auch auf das Dämpfungsverhalten gegenüber Krafteinwirkung von den entgegengesetzten Kolbenstangenseiten. Vorzugsweise ist der hydraulische Gleichlaufzylinder an einer Steuerventilanordnung angeschlossen, die so einstellbar ist, dass sie die Zylinderkammern des Gleichlaufzylinders außen über die Hydraulikanschlüsse miteinander verbindet, um einen Schwingungsdämpfungsmodus einzustellen. Alternativ oder zusätzlich wäre auch eine steuerbar zu schließende und zu öffnende zylinderinteme Kurzschlussverbindung zwischen den beiden Zylinderkammern denkbar. In beiden Fällen kann der Gleichlaufzylinder eine Doppelfunktion, nämlich einerseits die des Stellgliedes der Überschubvorrichtung und andererseits die des Dämpfungszylinders zur Schwingungsdämpfung aufweisen.

Als weitere passive schwingungsdämpfende Maßnahme ist gemäß einer Weiterbildung der Erfindung wenigstens ein federelastisches Rückstellelement derart in einer Verbindung zwischen dem Seitenschubrahmen und dem Fahrerstand angeordnet, dass es Schwingungsauslenkungen des Seitenschubrahmens relativ zu der Seitenschubrahmenführung entgegenwirken kann. Als federelastische Rückstellelemente kommen mechanische metallische Federn diverser Bauarten infrage. Auch gummielastische Pufferelemente können als Schwingungsrückstellelemente im Rahmen der Erfindung Verwendung finden. Gemäß einer Variante der Erfindung ist ein betreffendes federelastisches Rückstellelement in einer Verbindung zwischen dem Seitenschubrahmen und der Stelleinrichtung oder/und in einer Verbindung zwischen der Stelleinrichtung und dem Fahrerplatz jeweils derart in Reihe angeordnet, dass es Schwingungsauslenkungen des Seitenschubrahmens relativ zu dem Fahrerplatz entgegenwirken kann. Eine solche Anordnung bietet symmetrisches Rückstellverhalten unabhängig von der jeweiligen gewünschten Einstellposition des Seitenschubrahmens relativ zur Seitenschubrahmenführung und zum Fahrerstand.

Gemäß einer weiteren bevorzugten Ausführungsform der Erfindung ist wenigstens ein Sensor zur Erfassung von Schwingungen insbesondere des Seitenschubrahmens vorgesehen, wobei der Sensor mit der Steuereinrichtung zur Steuerung des Stellgliedes der Überschubvorrichtung in Datenübertragungsverbindung steht und die Steuereinrichtung im Schwingungsdämpfungsmodus dazu eingerichtet ist, das Stellglied der Überschubvorrichtung in Abhängigkeit von den Messinformationen des wenigstens einen Sensors so zu steuern, dass es etwaigen Schwingungen des Seitenschubrahmens entgegenwirkende Stellbewegungen ausführt. Damit ist eine aktive Variante der Schwingungsdämpfung bzw. Schwingungsunterdrückung angesprochen. Auch in diesem Fall hat der Gleichlaufzylinder eine Doppelfunktion, nämlich als Stellglied der Überschubvorrichtung und als aktiver Aktuator zur Schwingungsdämpfung.

Es kommen diverse Sensoren zur Schwingungserfassung infrage, so z.B. Dehnungsmessstreifen, piezoelektrische Elemente, Fluiddrucksensoren, Beschleunigungssensoren oder/und Abstandssensoren, etwa induktive Abstandssensoren, welche z.B. Bewegungen zwischen dem Seitenschubrahmen und der Seitenschubrahmenführung bzw. dem Fahrerstand erfassen. Dehnungsmessstreifen, insbesondere piezoelektrische Elemente können zur Messung von elastischen Deformationen des Hubgerüstes oder anderer Komponenten genutzt werden, die im Schwingungsfall gut messbare Deformationen zeigen. Fluiddrucksensoren können im Hydraulikkreis des Flurförderzeugs zur Erfassung von Druckschwankungen eingesetzt werden, welche auf Schwingungen des Hubgerüstes und daran angeordneter Komponenten hindeuten.

Im Rahmen der vorliegenden Erfindung sollte vorzugsweise wenigstens ein Sensor dazu angeordnet und eingerichtet sein, Lageänderungen des Seitenschubrahmens relativ zu der Seitenschubrahmenführung oder zum Fahrerstand zu erfassen, um Informationen zur Steuerung des Stellgliedes in dessen Funktion als aktives Schwingungsdämpfungselement bereitzustellen.

Vorzugsweise stehen mehrere Sensoren mit der Steuereinrichtung des Stellgliedes der Überschubvorrichtung in Datenübertragungsverbindung, wobei die Steuereinrichtung im Schwingungsdämpfungsmodus dazu eingerichtet ist, das Stellglied in Abhängigkeit von den Mesinformationen zumindest einiger der Sensoren so zu steuern, dass es etwaigen Schwingungen des Seitenschubrahmens entgegenwirkende Stellbewegungen ausführt, wobei die Sensoren Informationen über elastische Materialdehnungen des Hubgerüstes oder/und Schwingungen der Lastaufnahmevorrichtung relativ zum Seitenschubrahmen oder/und die aktuelle Fahrgeschwindigkeit des Flurförderzeugs oder/und die Hubhöhe des Fahrerstandes oder/und die Hubhöhe von Lastaufnahmemitteln der Lastaufnahmevorrichtung relativ zum Fahrerstand oder/und die Masse der von der Lastaufnahmevorrichtung getragenen Last bereitstellen.

Die Erfindung wird nachfolgend anhand eines Ausführungsbeispiels unter Bezugnahme auf die Zeichnungen näher erläutert.
- Fig. 1: zeigt in einer Seitenansicht ein Ausführungsbeispiel eines Flurförderzeugs nach der Erfindung.
- Fig. 2: zeigt das Flurförderzeug aus Fig. 1 in einer Draufsicht.
- Fig. 3: zeigt in einer perspektivischen Ansicht von schräg hinten den isolierten Rahmen des Fahrerplatzes des Flurförderzeugs aus Fig. 1 und Fig. 2 mit der daran angebrachten Seitenschubrahmenführung und dem an der Seitenschubrahmenführung angeordneten Seitenschubrahmen.
- Fig. 4: zeigt den Rahmen des Fahrerplatzes aus Fig. 3 in einer perspektivischen Ansicht von schräg vorne mit der daran angebrachten Seitenschubrahmenführung und einer Stelleinrichtung der Überschubvorrichtung.
- Fig. 5 - Fig.8: illustrieren in stark vereinfachten schematischen Darstellungen unterschiedliche Varianten passiver schwingungsdämpfener Maßnahmen.

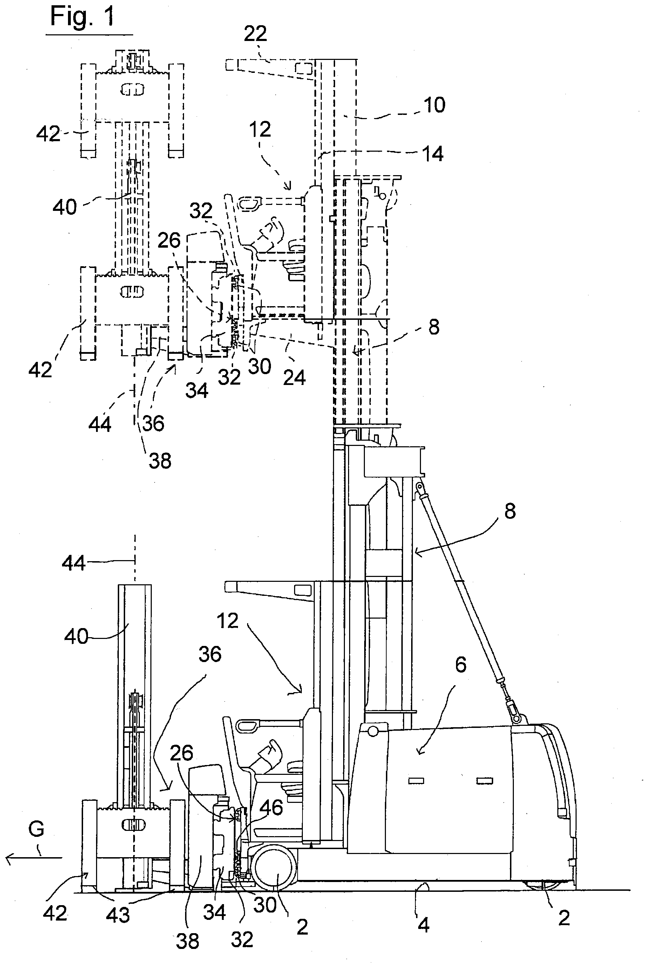

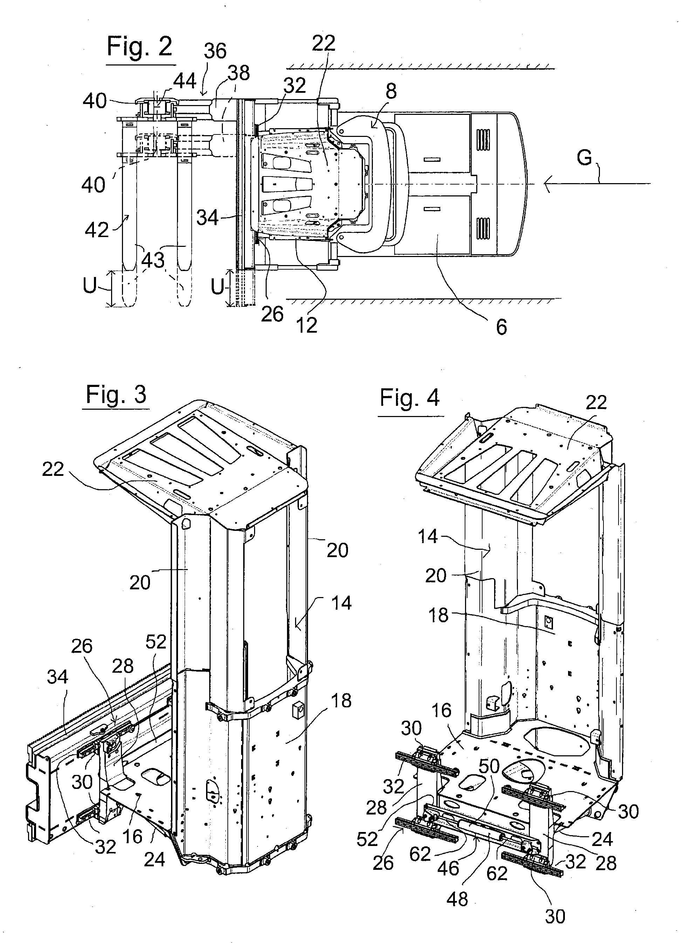

Das Flurförderzeug weist gemäß Fig. 1 ein über Räder 2 am Fahruntergrund 4 abgestütztes Chassis 6 und ein an dem Chassis 6 aufrecht stehend befestigtes Hubgerüst 8 auf. Das Hubgerüst 8 ist mehrteilig teleskopisch ausfahrbar ausgebildet, wie dies in Fig. 1 anhand der mit gestrichelten Linien gezeigten Ausfahrstellung zu erkennen ist. An der am weitesten ausfahrbaren Teleskopstufe 10 des Hubgerüstes 8 ist ein Fahrerplatz 12 vertikal verfahrbar angebracht. Der Fahrerplatz 12 ist als hebbare Fahrerkabine ausgestaltet, die einen in Fig. 3 und Fig. 4 erkennbaren Rahmen 14 mit Kabinenboden 16, Rückwand 18, Wangen 20 und Fahrerschutzdach 22 aufweist. In Front des Fahrerplatzes 12 ist an Rahmenbodenträgern 24 eine Seitenschubrahmenführung 26 befestigt, die im Beispielsfall aus zwei feststehenden vertikalen Holmen 28 gebildet ist, die an ihren Enden Führungsprofile 30 und darin längs verschiebbare Halteschienen 32 für den Seitenschubrahmen 34 aufweisen. In Fig. 3 ist die Anordnung des Seitenschubrahmens 34 an der Seitenschubrahmenführung 26 erkennbar. In Fig. 4 ist die Seitenschubrahmenführung 26 ohne Seitenschubrahmen 34 dargestellt.

Die Seitenschubrahmenführung 26 erlaubt ein seitlich horizontales Verschieben des Seitenschubrahmens 34 in einer Ebene quer zur Geradeausfahrtrichtung G des Flurförderzeuges, wie dies in Fig. 2 mit gestrichelten Linien angedeutet ist. An dem Seitenschubrahmen 34 ist eine an sich bekannte Lastaufnahmevorrichtung 36 seitlich quer zur Geradeausfahrtrichtung G des Flurförderzeugs verschiebbar angeordnet. Sie umfasst ein an dem Seitenschubrahmen 34 verfahrbares Schwenkschubgerät 38 mit einem vorne daran angeordneten Zusatzhubgerüst 40, an welchem als Lastaufnahmemittel eine Lasttraggabel 42 vertikal verfahrbar ist. Das Zusatzhubgerüst 40 ist zusammen mit der Lasttraggabel 42 um die Hochachse 44 zwischen der in Fig. 2 gut erkennbaren Stellung mit seitlicher Ausrichtung der Lasttraggabel 42 (links in bezug auf die Geradeausfahrtrichtung G) und einer Stellung mit entgegengesetzter seitlicher Ausrichtung der Lasttraggabel 42 schwenkbar.

Hervorzuhebende Besonderheit dieses Ausführungsbeispiels eines Flurförderzeugs nach der Erfindung ist die Überschubvorrichtung zur seitlichen Bewegung des Seitenschubrahmens 34. Die Überschubvorrichtung umfasst die Seitenschubrahmenführung 26 und eine steuerbare Stelleinrichtung 46 zur Bewegung des Seitenschubrahmens 34 entlang der Seitenschubrahmenführung 26, d.h. in Längsrichtung der Schienen 32. Die Stelleinrichtung 46 weist als Stellglied einen hydraulischen Gleichlaufzylinder 48 auf, der mit seinem Zylindergehäuse 50 fahrerplatzrahmenfest an einer sich zwischen den Holmen 28 erstreckenden und daran fixierten Halteplatte 52 befestigt ist.

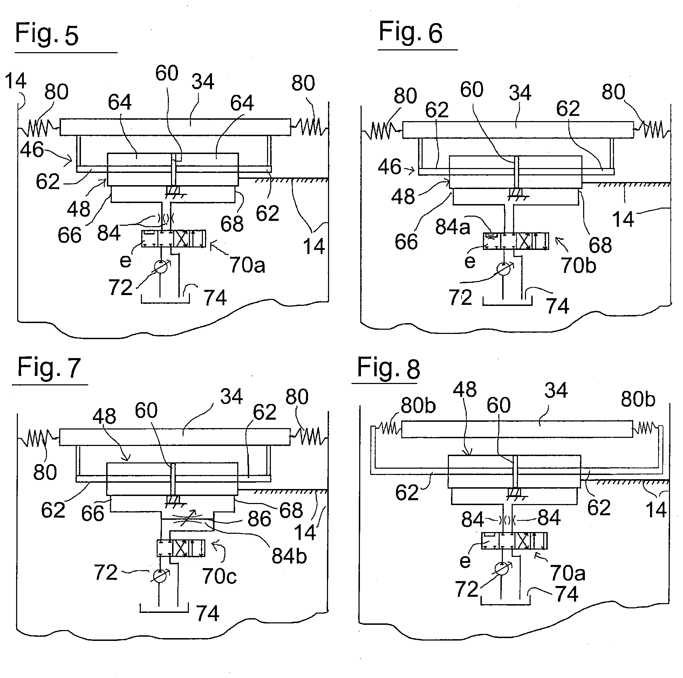

Von dem sich in dem Zylindergehäuse 50 verschiebbar aufgenommenen Kolben 60 (vgl. Fig. 5 - Fig. 8) stehen beiderseits Kolbenstangen 62 nach außen ab, und diese Kolbenstangen 62 sind an ihren äußeren Enden mit dem Seitenschubrahmen 34 verbunden. Die beiden durch den Kolben 60 separierten Zylinderkammern 64 des Gleichlaufzylinders 48 sind über Hydraulikanschlüsse 66, 68 mit einer hydraulischen Steuerventilanordnung 70a;...;70c verbunden und durch entsprechende Ansteuerung der hydraulischen Steuerventilanordnung 70a;...;70c wechselweise mit einer Hydraulikquelle (Pumpe) 72 oder mit einer Hydrauliksenke (Tank) 74 zu verbinden, um den Kolben 60 und den über die Kolbenstangen 62 damit verbundenen Seitenschubrahmen 34 in einer gewünschten Weise zu verschieben. Auf diese Weise kann der Seitenschubrahmen 34 mitsamt der Lastaufnahmevorrichtung 36 um ein bestimmtes Maß aus einer Neutrallage, wie sie in Fig. 2 mit durchgezogenen Linien eingezeichnet ist, in eine Überschublage, wie sie in Fig. 2 mit gestrichelten Linien eingezeichnet ist, längs der Seitenschubrahmenführung 26 mittels der steuerbaren Stelleinrichtung 46 und deren Gleichlaufzylinder 48 verschoben werden. Ein solcher Überschub des Seitenschubrahmens 34 ist zu beiden Seiten der Neutrallage möglich. Damit ist es möglich, die Lasttraggabel 42 mit ihren Gabelzinken 43 um das Überschubmaß U weiter seitlich zu verlagern als dies bisher bei bekannten Flurförderzeugen der eingangs genannten Art der Fall war. Ausgehend von der Stellung gemäß Fig. 2 kann die gestrichelt eingezeichnete Lasttraggabel zusätzlich noch um nahezu die gesamte Länge des Seitenschubrahmens 34 seitlich nach links in bezug auf die Geradeausfahrtrichtung G verschoben werden, so dass aufgrund des Teleskopiereffektes aus Überschub des Seitenschubrahmens 34 und Seitenschub des Schwenkschubgerätes 38 am Seitenschubrahmen 34 eine vergrößerte Einstapeltiefe mit der Lasttraggabel 42 erzielbar ist.

Gemäß eines besonderen Erfindungsaspektes wird der für den Überschub genutzte Bewegungsfreiheitsgrad des Seitenschubrahmens 34 relativ zu der Seitenschubrahmenführung 26 auch als Bewegungsfreiheitsgrad für Schwingungsausgleichsbewegungen zum Zwecke der Schwingungsdämpfung genutzt. Bei dem gezeigten Ausführungsbeispiel der Erfindung ist das erfindungsgemäße Konzept verwirklicht, die Schwingungsdämpfungseinrichtung zwischen dem Fahrerplatz 12 und der Lastaufnahmevorrichtung 36 vorzusehen. Bei der unter Bezug auf die Figuren 1 - 4 beschriebenen Konstellation bieten sich verschiedene Möglichkeiten der Auswahl und Verwendung von schwingungsdämpfenden Mitteln an. Einige davon werden nachstehend unter Bezugnahme auf die schematischen Diagramme der Fig. 5 - 8 erläutert.

Bei der passiven Schwingungsdämpfungsvariante gemäß Fig. 5 ist der Seitenschubrahmen 34 mittels Federn 80 an den Fahrerplatzrahmen 14 angekoppelt. Ferner kann die Steuerventilanordnung 70 a so geschaltet werden (Ventilabschnitt e zugeschaltet), dass die Hydraulikanschlüsse 66, 68 des Gleichlaufzylinders 48 über die Drosselstellen 84 miteinander verbunden- und somit die Zylinderkammern 64 über die Drosselstellen 84 kurzgeschlossen werden. Der Gleichlaufzylinder 48 wirkt dann mit den Drosselstellen 84 als passiver Dämpfungszylinder. Sollten Schwingungen im Hubgerüst oder den daran angeordneten Vorbauteilen entstehen, so kann der Seitenschubrahmen 34 Ausgleichsbewegungen seitlich quer zur Geradeausfahrtrichtung G unter der dämpfenden Wirkung des Ausgleichszylinders 48 und der Federn 80 ausführen, um die Schwingungen zu dämpfen bzw. zu unterdrücken. Bei einer Federankopplung des Seitenschubrahmens an den Fahrerplatzrahmen 14 in der in Fig. 5 - 7 angedeuteten Weise findet eine symmetrische Dämpfung von Schwingungsauslenkungen nur statt, wenn der Seitenschubrahmen 34 grundsätzlich in der Neutralstellung ist und die Schwingungsauslenkungen um die Neutralstellung herum stattfinden, d.h., wenn der Kolben 60 abgesehen von den Schwingungsauslenkungen grundsätzlich in der Mitte des Gleichlaufzylinders 48 eingestellt ist und die beiden Federn 80 abwechselnd in vergleichbarer Weise durch aufeinanderfolgende Schwingungsauslenkungen belastet werden. Ein Schwingungsdämpfungseffekt findet jedoch auch statt, wenn der Schwingungsdämpfungsmodus bei aus der Zylindermitte verschobenem Kolben 60 durch Zuschalten des Ventilabschnitts e eingestellt- und dabei über die Drosselstellen 84 ein Kurzschluss bzw. Nebenschluss der beiden Zylinderkammern 64 hergestellt wird.

Die Variante gemäß Fig. 6 entspricht im Wesentlichen der Variante gemäß Fig. 5, wobei in Fig. 6 die Drosselstellen 84 in den Verbindungsleitungen zwischen der Ventilanordnung 70 a und dem Gleichlaufzylinder 48 durch eine Drosselstelle 84 a im Nebenschlusszweig des Ventilabschnitts e ersetzt sind. Gleiche Komponenten sind in den Fig. 5 - 8 mit korrespondierend gleichen Bezugszeichen gekennzeichnet. Die Funktionsweise der Anordnung aus Fig. 6 entspricht der Funktionsweise der Anordnung aus Fig. 5.

Bei der Variante gemäß Fig. 7 ist an Stelle der Drosselstellen 84 (Fig. 5) und 84 a (Fig. 6) eine einstellbare Drossel 84 b in einer gesonderten Nebenschlussleitung 86, die die Hydraulikanschlüsse 66, 68 miteinander verbindet, vorgesehen. Durch Verstellen des Durchlassquerschnittes der einstellbaren Drossel 84 b kann auch der Schwingungsdämpfungsgrad der Anordnung gemäß Fig. 7 beeinflusst werden. Ansonsten entspricht die Funktionsweise der Anordnung aus Fig. 7 der Funktionsweise der Anordnungen aus Fig. 5 und Fig. 6. Es handelt sich dabei ebenfalls um eine passive Schwingungsdämpfungsvariante.

Bei der Variante gemäß Fig. 8 ist der Seitenschubrahmen 34 im Unterschied zu den Varianten gemäß Fig. 5 - 7 nicht über Federn an den Fahrerplatzrahmen 14 angekoppelt, sondern es liegt eine federnde Kopplung zwischen den Kolbenstangen 62 und dem Seitenschubrahmen 34 vor. Bei einer solchen federnden Kopplung (symbolisiert durch die Federn 80 b) wird ein symmetrischer Schwingungsrückstell- und Dämpfungseffekt unabhängig von der aktuellen Sollstellung des Seitenschubrahmens 34 erzielt, da die beiden Federn 80 b keine grundsätzlich ungleichen Vorspannungen aufweisen und somit abwechselnd stets in vergleichbarer Weise durch aufeinanderfolgende Schwingungsauslenkungen belastet werden. Der Gleichlaufzylinder 48 weist in Fig. 8 die gleiche hydraulische Beschaltung auf wie der Gleichlaufzylinder 48 in Fig. 5, so dass durch Zuschalten des Ventilabschnitts e ein Schwingungsdämpfungsmodus einstellbar ist, in dem die Zylinderkammern 64 über die Drosselstellen 84 kurzgeschlossen bzw. nebengeschlossen sind.

Es sind noch zahlreiche weitere Varianten der Schwingungsdämpfung zwischen dem Seitenschubrahmen 34 und dem Fahrerstand 12 möglich.

Insbesondere kann die steuerbare Stelleinrichtung 46 auch dazu genutzt werden, Schwingungen aktiv zu dämpfen, indem vermittels einer Sensorik die Schwingungsauslenkungen erfasst werden und eine Steuereinrichtung des Flurförderzeugs aus den Schwingungsauslenkungsdaten Daten zur Ansteuerung der steuerbaren Stelleinrichtung 46 generiert und die Stelleinrichtung 46 entsprechend steuert, so dass sie aktiv den Schwingungsauslenkungen durch Bewegen des Kolbens 60 entgegenwirkt.

Zusammengefasst wird ein Flurförderzeug vorgeschlagen, umfassend
- ein Hubgerüst (8),
- einen an dem Hubgerüst (8) auf- und abwärts bewegbaren Fahrerplatz (12),
- einen an dem Fahrerplatz (12) in dessen Front angeordneten Seitenschubrahmen (34), der zusammen mit dem Fahrerplatz (12) an dem Hubgerüst (8) auf- und abwärts bewegbar ist und eine seitlich quer zur Geradeausfahrtrichtung (G) des Flurförderzeugs hin- und her bewegbare Lastaufnahmevorrichtung (36) trägt, und
- eine mit dem Fahrerplatz (12) an dem Hubgerüst auf- und abwärts bewegbare Schwingungsdämpfungseinrichtung (48, 80, 84) zur Dämpfung von Schwingungen,
wobei die Schwingungsdämpfungseinrichtung (48, 80, 84) zwischen dem Fahrerplatz (12) und der Lastaufnahmevorrichtung (36) angeordnet- und dazu eingerichtet ist, Schwingungsausgleichsbewegungen der Lastaufnahmevorrichtung (36) relativ zum Fahrerplatz (12) zu ermöglichen, um Schwingungen zu dämpfen oder zu unterdrücken. Vorzugsweise ist eine Überschubvorrichtung zur seitlichen Bewegung des Seitenschubrahmens (34) quer zur Geradeausfahrtrichtung (G) des Flurförderzeugs und relativ zu dem Fahrerplatz (12) vorhanden, die dazu eingerichtet ist, den Seitenschubrahmen (34) längs der Seitenschubrahmenführung (26) zu bewegen, um den seitlichen Bewegungsbereich der Lastaufnahmevorrichtung (36) relativ zu dem Fahrerplatz (12) zu vergrößern. Die Schwingungsdämpfungseinrichtung ist gemäß eines besonders bevorzugten Ausführungsbeispiels der Erfindung mit der Überschubvorrichtung kombiniert bzw. darin integriert.

## Patentansprüche

1. Flurförderzeug umfassend
- ein Hubgerüst (8),
- einen an dem Hubgerüst (8) auf- und abwärts bewegbaren Fahrerplatz (12),
- einen an dem Fahrerplatz (12) in dessen Front angeordneten Seitenschubrahmen (34), der zusammen mit dem Fahrerplatz (12) an dem Hubgerüst (8) auf- und abwärts bewegbar ist und eine seitlich quer zur Geradeausfahrtrichtung (G) des Flurförderzeugs hin- und her bewegbare Lastaufnahmevorrichtung (36) trägt, und
- eine mit dem Fahrerplatz (12) an dem Hubgerüst auf- und abwärts bewegbare Schwingungsdämpfungseinrichtung (48, 80, 84) zur Dämpfung von Schwingungen,
**dadurch gekennzeichnet, dass** die Schwingungsdämpfungseinrichtung (48, 80, 84) zwischen dem Fahrerplatz (12) und der Lastaufnahmevorrichtung (36) angeordnet- und dazu eingerichtet ist, Schwingungsausgleichsbewegungen der Lastaufnahmevorrichtung (36) relativ zum Fahrerplatz (12) zu ermöglichen, um Schwingungen zu dämpfen oder zu unterdrücken.

2. Flurförderzeug nach Anspruch 1, **dadurch gekennzeichnet, dass** die Schwingungsdämpfungseinrichtung (48, 80, 84) zwischen dem Fahrerplatz (12) und dem Seitenschubrahmen (34) angeordnet und dazu eingerichtet ist, gemeinsame Schwingungsausgleichsbewegungen der Lastaufnahmevorrichtung (36) und des Seitenschubrahmens (34) relativ zum Fahrerplatz (12) zu ermöglichen, um Schwingungen zu dämpfen oder zu unterdrücken.

3. Flurförderzeug nach Anspruch 2, **dadurch gekennzeichnet, dass** an dem Fahrerplatz (12) eine Seitenschubrahmenführung (26) vorgesehen ist, an der der Seitenschubrahmen (34) zur Ausführung von Schwingungsausgleichsbewegungen seitlich quer zur Geradeausfahrtrichtung (G) des Flurförderzeugs und relativ zum Fahrerplatz (12) bewegbar geführt ist.

4. Flurförderzeug nach einem der vorhergehenden Ansprüche, **dadurch gekennzeichnet, dass** die Schwingungsdämpfungseinrichtung (48, 80, 84) wenigstens ein federelastisches Rückstellelement (80) in einer Verbindung zwischen der Lastaufnahmevorrichtung (36) und dem Fahrerplatz (12), vorzugsweise zwischen dem Seitenschubrahmen (34) und dem Fahrerplatz (12) aufweist, welches derart angeordnet ist, dass es Schwingungsauslenkungen der Lastaufnahmevorrichtung (36) oder/und des Seitenschubrahmens (34) relativ zum Fahrerplatz (12) entgegenwirken kann.

5. Flurförderzeug nach einem der vorhergehenden Ansprüche, **dadurch gekennzeichnet, dass** die Schwingungsdämpfungseinrichtung (48, 80, 84) wenigstens ein hydraulisches, pneumatisches oder hydropneumatisches Stoßdämpferelement (48) in einer Verbindung zwischen der Lastaufnahmevorrichtung (36) und dem Fahrerplatz (12), vorzugsweise zwischen dem Seitenschubrahmen (34) und dem Fahrerplatz (12) aufweist.

6. Flurförderzeug nach Anspruch 5, wobei das Stoßdämpferelement (48) in Form eines Zylinders ausgebildet ist, der in einem Zylindergehäuse (50) zwei durch einen darin bewegbaren Kolben (60) separierte Zylinderkammern, (64,64) aufweist, die ein Fluid enthalten und über eine Drosselstelle miteinander verbunden sind.

7. Flurförderzeug nach einem der vorhergehenden Ansprüche, **dadurch gekennzeichnet, dass** die Schwingungsdämpfungseinrichtung (48, 80, 84) wenigstens ein mittels einer Steuereinrichtung steuerbares aktives hydraulisches, pneumatisches, hydropneumatisches oder elektromotorisches Schwingungsdämpfungsglied (48) aufweist.

8. Flurförderzeug nach einem der vorhergehenden Ansprüche, gekennzeichnet, dass es zum Zwecke der Vergrößerung des seitlichen Bewegungsbereichs der Lastaufnahmevorrichtung (36) relativ zu dem Fahrerplatz (12) eine Überschubvorrichtung zur gesteuerten seitlichen Positionierung des Seitenschubrahmens (34) quer zur Geradeausfahrtrichtung (G) des Flurförderzeugs und relativ zu dem Fahrerplatz (12) aufweist, wobei die Überschubvorrichtung die Seitenschubrahmenführung (26) und eine steuerbare Stelleinrichtung (46) zur Bewegung des Seitenschubrahmens (34) längs der Seitenschubrahmenführung (26) umfasst, wobei die Schwingungsdämpfungseinrichtung in die Überschubvorrichtung integriert ist.

9. Flurförderzeug nach Anspruch 8, **dadurch gekennzeichnet, dass** die Stelleinrichtung (46) wenigstens ein mittels einer Steuereinrichtung steuerbares Stellglied (48), nämlich ein hydraulisches Stellglied oder/und ein elektromotorisches Stellglied oder/und ein hydropneumatisches Stellglied als Antriebsmittel zur Bewegung des Seitenschubrahmens aufweist, wobei das Stellglied in einem Schwingungsdämpfungsmodus der Überschubvorrichtung als Schwingungsdämpfungsglied betreibbar ist.

10. Flurförderzeug nach Anspruch 9, **dadurch gekennzeichnet, dass** das steuerbare Stellglied (48) ein doppelt wirkender hydraulischer Gleichlaufzylinder zwischen dem Fahrerplatz (12) und dem Seitenschubrahmen (34) ist, wobei der Gleichlaufzylinder (48) in einem Zylindergehäuse (50) zwei durch einen darin bewegbaren Kolben (60) separierte Zylinderkammern (64, 64) mit wenigstens einem jeweiligen Hydraulikanschluss (66, 68) für die Zuleitung und Ableitung von Hydraulikfluid umfasst, wobei das Stellglied (48) als aktives oder/und passives Schwingungsdämpfungsglied betreibbar ist.

11. Flurförderzeug nach Anspruch 10, **dadurch gekennzeichnet, dass** der hydraulische Gleichlaufzylinder (48) so ansteuerbar ist, dass die Zylinderkammern (64, 64) über wenigstens eine hydraulische Drosselstelle (84; 84a; 84b) miteinander verbunden werden, um einen passiven Schwingungsdämpfungsmodus einzustellen.

12. Flurförderzeug nach Anspruch 8 oder nach einem auf Anspruch 8 rückbezogenen Anspruch, **dadurch gekennzeichnet, dass** in einer Verbindung zwischen dem Seitenschubrahmen (34) und der Stelleinrichtung (46) oder/und in einer Verbindung zwischen der Stelleinrichtung (46) und dem Fahrerplatz (12) wenigstens ein federelastisches Rückstellelement (80b) derart angeordnet ist, dass es Schwingungsauslenkungen des Seitenschubrahmens (34) relativ zu dem Fahrerplatz (12) entgegenwirken kann.

13. Flurförderzeug nach Anspruch 8 oder nach einem auf Anspruch 8 rückbezogen Anspruch, **dadurch gekennzeichnet, dass** wenigstens ein Sensor zur Erfassung von Schwingungen des Seitenschubrahmens (34) oder/und der Lastaufnahmevorrichtung (36) vorgesehen ist, der mit der Steuereinrichtung des Stellgliedes (48) der Überschubvorrichtung in Datenübertragungsverbindung steht, wobei die Steuereinrichtung dazu eingerichtet ist, in einem aktiven Schwingungsdämpfungsmodus der Überschubvorrichtung das Stellglied (48) der Überschubvorrichtung in Abhängigkeit von den Messinformationen des wenigstens einen Sensors so zu steuern, dass es etwaigen Schwingungen des Seitenschubrahmens (34) oder/und der Lastaufnahmevorrichtung (36) entgegenwirkende Stellbewegungen ausführt.

14. Flurförderzeug nach Anspruch 8, **dadurch gekennzeichnet, dass** der wenigstens eine Sensor ausgewählt ist aus der Gruppe folgender Sensoren:
- Dehnungsmessstreifen;
- piezoelektrisches Element;
- Fluiddrucksensor;
- Beschleunigungssensor;
- Abstandssensor.

15. Flurförderzeug nach Anspruch 14, **dadurch gekennzeichnet, dass** der wenigstens eine Sensor dazu angeordnet und eingerichtet ist, Lageänderungen des Seitenschubrahmens (34) relativ zu der Seitenschubrahmenführung (26) oder zum Fahrerplatz (12) zu erfassen.

16. Flurförderzeug nach einem der vorhergehenden Ansprüche 8-15, **dadurch gekennzeichnet, dass** mehrere Sensoren mit der Steuereinrichtung des Stellgliedes (48) der Überschubvorrichtung in Datenübertragungsverbindung stehen, wobei die Steuereinrichtung dazu eingerichtet ist, in einem aktiven Schwingungsdämpfungsmodus der Überschubvorrichtung das Stellglied (48) der Überschubvorrichtung in Abhängigkeit von den Messinformationen zumindest einiger der Sensoren so zu steuern, dass es etwaigen Schwingungen des Seitenschubrahmens (34) entgegenwirkende Stellbewegungen ausführt, wobei die Sensoren dazu eingerichtet sind, Informationen über elastische Materialdehnungen des Hubgerüstes (8) oder/und Schwingungen der Lastaufnahmevorrichtung (36) relativ zum Seitenschubrahmen (34) oder/und die aktuelle Fahrgeschwindigkeit des Flurförderzeugs oder/und die Hubhöhe des Fahrerplatzes (12) oder/und die Hubhöhe der Lastaufnahmevorrichtung relativ zum Fahrerplatz (12) oder/und die Masse der von der Lastaufnahmevorrichtung (36) getragenen Last bereitzustellen.

## Claims

1. Industrial truck comprising
- a lifting frame (8),
- an operator compartment (12) which can be moved upwards and downwards on the lifting frame (8),
- a lateral push frame (34), which is arranged on the operator compartment (12), in the front thereof, and which can be moved upwards and downwards on the lifting frame (8) together with the operator compartment (12) and carries a load-receiving apparatus (36), which can be moved back and forth laterally transversely to the straight forward travel direction (G) of the industrial truck, and
- a vibration-damping device (48, 80, 84), which can be moved upwards and downwards on the lifting frame together with the operator compartment (12), for damping vibrations,
**characterised in that** the vibration-damping device (48, 80, 84) is arranged between the operator compartment (12) and the load-receiving apparatus (36) and is designed to permit vibration compensation movements of the load-receiving apparatus (36) relative to the operator compartment (12) so as to damp or suppress vibrations.

2. Industrial truck according to claim 1, **characterised in that** the vibration-damping device (48, 80, 84) is arranged between the operator compartment (12) and the lateral push frame (34), and is designed to permit shared vibration compensation movements of the loadreceiving apparatus (36) and the lateral push frame (34) relative to the operator compartment (12) so as to damp or suppress vibrations.

3. Industrial truck according to claim 2, **characterised in that** a lateral push frame guide (26), on which the lateral push frame (34) is movably guided so as to perform vibration compensation movements laterally transversely to the straight forward travel direction (G) of the industrial truck and relative to the operator compartment (12), is provided on the operator compartment (12).

4. Industrial truck according to any of the preceding claims, **characterised in that** the vibration-damping device (48, 80, 84) comprises at least one resilient return element (80) in a connection between the load-receiving apparatus (36) and the operator compartment (12), preferably between the lateral push frame (34) and the operator compartment (12), which return element is arranged in such a way that it can counter vibratory deflections of the loadreceiving apparatus (36) and/or of the lateral push frame (34) relative to the operator compartment (12).

5. Industrial truck according to any of the preceding claims, **characterised in that** the vibration-damping device (48, 80, 84) also comprises at least one hydraulic, pneumatic or hydropneumatic shock absorber element (48) in a connection between the load-receiving apparatus (36) and the operator compartment (12), preferably between the lateral push frame (34) and the operator compartment (12).

6. Industrial truck according to claim 5, wherein the shock absorber element (48) is in the form of a cylinder, which comprises, in a cylinder housing (50), two cylinder chambers (64, 64) which are separated by a piston (60) movable in said housing and which contain a fluid and are interconnected via a throttle point.

7. Industrial truck according to any of the preceding claims, **characterised in that** the vibration-damping device (48, 80, 84) comprises at least one active hydraulic, pneumatic, hydropneumatic or electromotive vibration-damping member (48) which can be controlled by means of a controller.

8. Industrial truck according to any of the preceding claims, **characterised in that** it comprises, for the purpose of increasing the lateral movement range of the load-receiving apparatus (36) relative to the operator compartment (12), an over-reach apparatus for controlled lateral positioning of the lateral push frame (34) transversely to the straight forward travel direction (G) of the industrial truck and relative to the operator compartment (12), the over-reach apparatus comprising the lateral push frame guide (26) and a controllable adjustment device (46) for moving the lateral push frame (34) along the lateral push frame guide (26), the vibration-damping device being integrated into the over-reach apparatus.

9. Industrial truck according to claim 8, **characterised in that** the adjustment device (46) comprises at least one adjustment member (48) which can be controlled by means of a controller, specifically a hydraulic adjustment member and/or an electromotive adjustment member and/or a hydropneumatic adjustment member as drive means for moving the lateral push frame, the adjustment member being operable as a vibration-damping member in a vibration-damping mode of the over-reach apparatus.

10. Industrial truck according to claim 9, **characterised in that** the controllable adjustment member (48) is a double-action hydraulic synchronised cylinder between the operator compartment (12) and the lateral push frame (34), the synchronised cylinder (48) comprising, in a cylinder housing (50), two cylinder chambers (64, 64) which are separated by a piston (60) movable in said housing and which have at least one hydraulic connection (66, 68) in each case for supplying and removing hydraulic fluid, the adjustment member (48) being operable as an active and/or passive vibration-damping member.

11. Industrial truck according to claim 10, **characterised in that** the hydraulic synchronised cylinder (48) can be actuated in such a way that the cylinder chambers (64, 64) are interconnected via at least one hydraulic throttle point (84; 84a; 84b) so as to set a passive vibration-damping mode.

12. Industrial truck according to claim 8 or according to any claim dependent on claim 8, **characterised in that** at least one resilient return element (80b) is arranged in a connection between the lateral push frame (34) and the adjustment device (46) and/or in a connection between the adjustment device (46) and the operator compartment (12) in such a way that said element can counter vibratory deflections of the lateral push frame (34) relative to the operator compartment (12).

13. Industrial truck according to claim 8 or according to any claim dependent on claim 8, **characterised in that** at least one sensor is provided for detecting vibrations of the lateral push frame (34) and/or the load-receiving apparatus (36), and is in data transfer connection with the controller of the adjustment member (48) of the over-reach apparatus, the controller being designed, in an active vibration-damping mode of the over-reach apparatus, to control the adjustment member (48) of the over-reach apparatus on the basis of the measurement information from the at least one sensor in such a way that said adjustment member performs adjustment movements which counter any vibrations of the lateral push frame (34) and/or the load-receiving apparatus (36).

14. Industrial truck according to claim 8, **characterised in that** the at least one sensor is selected from the group comprising the following sensors:
- strain gauge;
- piezoelectric element;
- fluid pressure sensor;
- acceleration sensor; and
- distance sensor.

15. Industrial truck according to claim 14, **characterised in that** the at least one sensor is arranged and designed so as to detect changes in position of the lateral push frame (34) relative to the lateral push frame guide (26) or to the operator compartment (12).

16. Industrial truck according to any of the preceding claims 8 to 15, **characterised in that** a plurality of sensors are in data transfer connection with the controller of the adjustment member (48) of the over-reach apparatus, the controller being designed, in an active vibration-damping mode of the over-reach apparatus, to control the adjustment member (48) of the over-reach apparatus on the basis of the measurement information from at least some of the sensors in such a way that said member performs adjustment movements which counter any vibrations of the lateral push frame (34), the sensors being designed to provide information concerning resilient material strains of the lifting frame (8) and/or vibrations of the load-receiving apparatus (36) relative to the lateral push frame (34) and/or the current travel speed of the industrial truck and/or the lifting height of the operator compartment (12) and/or the lifting height of the load-receiving apparatus relative to the operator compartment (12) and/or the mass of the load carried by the load-receiving apparatus (36).

## Revendications

1. Chariot de manutention comprenant
- un cadre de levage (8),
- un poste de conduite (12) pouvant être déplacé vers le haut et vers le bas au niveau du cadre de levage (8),
- un châssis de poussée latérale (34) disposé au niveau du poste de conduite (12) dans sa partie avant, lequel peut être déplacé vers le haut et vers le bas conjointement avec le poste de conduite (12) au niveau du cadre de levage (8) et qui supporte un dispositif de réception de charges (36) pouvant être déplacé en va-et-vient sur le côté de manière transversale par rapport à la direction de déplacement en ligne droite (G) du chariot de manutention, et
- un système d'amortissement de vibrations (48, 80, 84) pouvant être déplacé vers le haut et vers le bas avec le poste de conduite (12) au niveau du cadre de levage, servant à amortir des vibrations,
**caractérisé en ce que** le système d'amortissement de vibrations (48, 80, 84) est disposé entre le poste de conduite (12) et le dispositif de réception de charges (36) et est configuré afin
de permettre des déplacements de compensation de vibrations du dispositif de réception de charges (36) par rapport au poste de conduite (12) afin d'amortir ou de supprimer des vibrations.

2. Chariot de manutention selon la revendication 1, **caractérisé en ce que** le système d'amortissement de vibrations (48, 80, 84) est disposé entre le poste de conduite (12) et le châssis de poussée latérale (34) et est configuré afin de permettre des déplacements de compensation de vibrations communs du dispositif de réception de charges (36) et du châssis de poussée latérale (34) par rapport au poste de conduite (12) afin d'amortir ou de supprimer des vibrations.

3. Chariot de manutention selon la revendication 2, **caractérisé en ce qu'**est prévu, au niveau du poste de conduite (12), un guidage de châssis de poussée latérale (26), au niveau duquel le châssis de poussée latérale (34) est guidé de manière à pouvoir être déplacé sur le côté de manière transversale par rapport à la direction de déplacement en ligne droite (G) du chariot de manutention et par rapport au poste de conduite (12) afin d'exécuter des déplacements de compensation de vibrations.

4. Chariot de manutention selon l'une quelconque des revendications précédentes, **caractérisé en ce que** le système d'amortissement de vibrations (48, 80, 84) présente au moins un élément de rappel (80) élastique dans une liaison entre le dispositif de réception de charges (36) et le poste de conduite (12), de préférence entre le châssis de poussée latérale (34) et le poste de conduite (12), lequel est disposé de telle manière qu'il peut compenser des déviations de vibrations du dispositif de réception de charges (36) et/ou du châssis de poussée latérale (34) par rapport au poste de conduite (12).

5. Chariot de manutention selon l'une quelconque des revendications précédentes, **caractérisé en ce que** le système d'amortissement de vibrations (48, 80, 84) présente au moins un élément amortisseur de chocs (48) hydraulique, pneumatique ou hydropneumatique dans une liaison entre le dispositif de réception de charges (36) et le poste de conduite (12), de préférence entre le châssis de poussée latérale (34) et le poste de conduite (12).

6. Chariot de manutention selon la revendication 5, dans lequel l'élément amortisseur de chocs (48) est réalisé sous la forme d'un cylindre, qui présente, dans un boîtier de cylindre (50), deux chambres de cylindre (64, 64) séparées par un piston (60) pouvant être déplacé dans ledit boîtier de cylindre, lesquelles contiennent un fluide et sont reliées entre elles par l'intermédiaire d'un point d'étranglement.

7. Chariot de manutention selon l'une quelconque des revendications précédentes, **caractérisé en ce que** le système d'amortissement de vibrations (48, 80, 84) présente au moins un organe d'amortissement de vibrations (48) pouvant être commandé au moyen d'un système de commande, actif, hydraulique, pneumatique, hydropneumatique ou fonctionnant avec un moteur électrique.

8. Chariot de manutention selon l'une quelconque des revendications précédentes, **caractérisé en ce qu'**il présente, aux fins de l'agrandissement de la zone de déplacement latérale du dispositif de réception de charges (36) par rapport au poste de conduite (12), un dispositif de poussée supérieure servant à positionner latéralement de manière commandée le châssis de poussée latérale (34) de manière transversale par rapport à la direction de déplacement en ligne droite (G) du chariot de manutention et par rapport au poste de conduite (12), dans lequel le dispositif de poussée supérieure comprend le guidage de châssis de poussée latérale (26) et un système de réglage (46) pouvant être commandé servant à déplacer le châssis de poussée latérale (34) le long du guidage de châssis de poussée latérale (26), dans lequel le système d'amortissement de vibrations est intégré dans le dispositif de poussée supérieure.

9. Chariot de manutention selon la revendication 8, **caractérisé en ce que** le système de réglage (46) présente au moins un organe de réglage (48) pouvant être commandé au moyen d'un système de commande, à savoir un organe de réglage hydraulique et/ou un organe de réglage fonctionnant avec un moteur électrique et/ou un organe de réglage hydropneumatique en tant que moyen d'entraînement servant à déplacer le châssis de poussée latérale, dans lequel l'organe de réglage peut fonctionner dans un mode d'amortissement de vibrations du dispositif de poussée supérieure en tant qu'organe d'amortissement de vibrations.

10. Chariot de manutention selon la revendication 9, **caractérisé en ce que** l'organe de réglage (48) pouvant être commandé est un cylindre de synchronisation hydraulique à double action entre le poste de conduite (12) et le châssis de poussée latérale (34), dans lequel le cylindre de synchronisation (48) comprend, dans un cylindre de boîtier (50), deux chambres de cylindre (64, 64) séparées par un piston (60) pouvant être déplacé dans ledit boîtier de cylindre, avec au moins un raccord hydraulique (66, 68) respectivement pour l'amenée et l'évacuation de fluide hydraulique, dans lequel l'organe de réglage (48) peut fonctionner sous la forme d'un organe d'amortissement de vibrations actif et/ou passif.

11. Chariot de manutention selon la revendication 10, **caractérisé en ce que** le cylindre de synchronisation (48) hydraulique peut être piloté de telle manière que les chambres de cylindre (64, 64) sont reliées les unes aux autres par l'intermédiaire d'au moins un point d'étranglement (84 ; 84a ; 84b) hydraulique, afin de régler un mode d'amortissement de vibrations passif.

12. Chariot de manutention selon la revendication 8 ou selon une revendication se rapportant à la revendication 8, **caractérisé en ce qu'**au moins un élément de rappel (80b) élastique est disposé dans une liaison entre le châssis de poussée latérale (34) et le système de commande (46) et/ou dans une liaison entre le système de réglage (46) et le poste de conduite (12) de telle manière qu'il peut compenser des déviations de vibrations du châssis de poussée latérale (34) par rapport au poste de conduite (12).

13. Chariot de manutention selon la revendication 8 ou selon une revendication se rapportant à la revendication 8, **caractérisé en ce qu'**au moins un capteur est prévu afin de détecter des vibrations du châssis de poussée latérale (34) et/ou du dispositif de réception de charges (36), lequel capteur est en liaison de transmission de données avec le système de commande de l'organe de réglage (48) du dispositif de poussée supérieure, dans lequel le système de commande est configuré afin de commander, dans un mode d'amortissement de vibrations actif du dispositif de poussée supérieure, l'organe de réglage (48) du dispositif de poussée supérieure en fonction des informations de mesure de l'au moins un capteur de sorte qu'il exécute des déplacements de réglage compensant d'éventuelles vibrations du châssis de poussée latérale (34) et/ou du dispositif de réception de charges (36).

14. Chariot de manutention selon la revendication 8, **caractérisé en ce que** l'au moins un capteur est choisi parmi le groupe des capteurs suivants :
- jauge extensométrique ;
- élément piézoélectrique ;
- capteur de pression de fluide ;
- capteur d'accélération ;
- capteur de distance.

15. Chariot de manutention selon la revendication 14, **caractérisé en ce que** l'au moins un capteur est disposé et configuré afin de détecter des variations de position du châssis de poussée latérale (34) par rapport au guidage de châssis de poussée latérale (26) ou au poste de conduite (12).

16. Chariot de manutention selon l'une quelconque des revendications précédentes 8 à 15, **caractérisé en ce que** plusieurs capteurs sont en liaison de transmission de données avec le système de commande de l'organe de réglage (48) du dispositif de poussée supérieure, dans lequel le système de commande est configuré afin de commander, dans un mode d'amortissement de vibrations actif du dispositif de poussée supérieure, l'organe de réglage (48) du dispositif de poussée supérieure en fonction des informations de mesure au moins de quelques-uns des capteurs de sorte qu'il exécute des déplacements de réglage contrecarrant d'éventuelles vibrations du châssis de poussée latérale (34), dans lequel les capteurs sont configurés pour fournir des informations sur des extensions de matériau élastiques du cadre de levage (8) et/ou sur des vibrations du dispositif de réception de charges (36) par rapport au châssis de poussée latérale (34) et/ou sur la vitesse de déplacement instantanée du chariot de manutention et/ou sur la hauteur de levage du poste de conduite (12) et/ou sur la hauteur de levage du dispositif de réception de charges par rapport au poste de conduite (12) et/ou sur le poids de la charge supportée par le dispositif de réception de charges (36).
